# EUROPEAN PATENT SPECIFICATION

(11) **EP 0 852 159 B1**
(45) Date of publication and mention of the grant of the patent: **21.05.2003**
(21) Application number: 97122125.4
(22) Date of filing: 16.12.1997
(51) Int. Cl.: B01D 53/86, C01B 17/79, C01B 17/98

(54) **Process for the desulphurization of gaseous substrate**
Verfahren zur Entschwefelung von Gasen
Procédé de désulfuration de gaz

(30) Priority: 06.01.1997 US 35281 P
(43) Date of publication of application: 08.07.1998
(73) Proprietor: Haldor Topsoe A/S, 2800 Lyngby (DK)
(72) Inventor: Schoubye, Peter, 2950 Horsholm (DK)
(74) Representative: Zellentin, Wiger

(56) References cited:
- EP-A- 0 514 941
- GB-A- 782 011
- US-A- 3 615 196
- US-A- 5 198 206
- HAGGIN J: "CATALYTIC OXIDATION PROCESS CLEANS VOLATILE ORGANICS FROM EXHAUST" CHEMICAL AND ENGINEERING NEWS, vol. 72, no. 26, 27 June 1994, page 42/43 XP000450276

## Description

### BACKGROUND OF THE INVENTION

### 1. Field of the Invention:

The present invention is directed to desulphurization of a gaseous substrate.

### 2. Description of the Prior Art:

It is well known in the performance of gas phase reactions to heat up the reactant gas mixture to the reaction temperature by regenerative heat exchange with hot exit gas after the reaction. The combination of gas phase reaction with regenerative heat exchange is, in particular, advantageous compared to the use of recuperative heat exchange, such as a shell-and-tube heat exchanger, in processes with an adiabatic temperature increase caused by the reaction smaller than about 25% of the increase in temperature required to heat up the inlet gas to the reaction temperature. This is because regenerative heat exchangers usually are less expensive than recuperative heat exchangers when the thermal heat exchange efficiency is higher than 75%.

Thermal efficiency up to 98% is typically achieved in regenerative heat exchange, which cannot be achieved practically by recuperative heat exchange. DK Patent Application No. 0375/77 and Yu. Sh. Matros in "Catalytic Processes under Unsteady State Conditions", Elsevier, Amsterdam/New York, 1989, disclose examples on use of regenerative heat exchange combined with reactions such as catalytic oxidation of SO₂ or combustible components in off gases in which the adiabatic temperature increase by the oxidation reactions are from a few degrees up to 100-200°C. In known applications in which SO₂ is oxidized into SO₃, the process gas is free of H₂O and H₂SO₄-vapour in order to avoid condensation of sulphuric acid in the regenerative heat exchanger.

### SUMMARY OF THE INVENTION

The general object of this invention is to improve the known processes for the desulphurization of gases by use of regenerative heat exchange in combination with oxidation of SO₂ into SO₃ in gases containing H₂O.

Accordingly, this invention provides a process for desulphurization of an off gas containing O₂, and sulphur-containing components like SO₂, SO₃, H₂SO₄, H₂O, CS₂, COS and organic sulphur-containing components, in which the combustible components are catalytically oxidized to H₂O, CO₂ and SO₂ over a combustion catalyst, and SO₂ is further catalytically oxidized to SO₃ over a sulphuric acid catalyst, SO₃ is further hydrated and condensed as sulphuric acid in presence of at least an equivalent amount of H₂O in the gas, the process being conducted in at least two reactors that are connected in series, each reactor being loaded with a layer of combustion catalyst placed between a layer of inert and acid resistant material with low or no open porosity, and a layer of sulphuric acid catalyst, the process comprising the steps of :
reversing a direction of gas flow in the reactors after periods of approximately 1-40 minutes; and
maintaining the temperature in the layer of catalyst in a range of 300-500°C;
wherein after oxidation of the sulphur-containing components the temperature of a gas stream leaving the reactors is at least 50°C below the H₂SO₄ dew point of the gas; and
condensed sulphuric acid is drained off from the bottom of each reactor.

Water may be present either as H₂O vapour in the inlet gas or formed in the oxidation of other combustibles and/or added as steam or water spray in the process. H₂O is thereby present in amounts being at least equivalent to the amount of SO₃ formed in the process.

The process treats gases which may contain SO₂, SO₃, H₂SO₄ present as vapour or aerosol, organic combustible components including organic components containing sulphur, H₂S, COS and CS₂, which are oxidized catalytically at about 400°C.

The gas to be treated in the above process is fed into one of the regenerative heat exchange beds at a temperature being at least 50°C below the sulphuric acid dew point of the gas exiting the catalyst layers, whereby all of the formed SO₃ is hydrated into H₂SO₄ vapour, most of which is condensed in the lower section of the heat exchange beds. Hereby, the heat of hydration of SO₃ and condensation of sulphuric acid is utilized in the regenerative heat exchange for heating up the cold inlet gas to the required reaction temperature. Mass velocity of the gas in each of the two reactors is 1000-10000 Nm³/h per m² of reactor cross section. The temperature in the layers of oxidation catalyst is maintained by either heating the gas stream, cooling the gas, and purging up to 20% of the gas. The inert layer in each of the two reactors is a 0.5-5 meter high layer of acid resistant ceramic bodies with a volume to surface ratio of 1.5 to 15 mm. Preferably, the layer of inert material in each of the two reactors is a bed of monoliths of an acid resistant material with parallel, vertical channels with a diameter of 3-20 mm. A preferred sulphuric acid catalyst is vanadium oxide supported on a silica carrier material and promoted with alkali metals. Preferred alkali metals are potassium, sodium, and/or cesium.

Furthermore, substantially all of the content of H₂SO₄ in the gas can be recovered and drained off from the heat exchange beds by cooling the exit gas to a temperature below of approximately 100°C and adding particles to a concentration of about 10¹⁰-10¹² particles per Nm³ per 1000 ppm of SO₃ in the gas for heterogeneous nucleation control of the condensation in order to suppress the formation of sulphuric acid aerosol in the condensation.

The particles added to the gas stream are produced by thermal combustion of a silicon oil in a stream of air that is mixed into the gas.

The heat exchange beds are made of acid resistant material. The heat exchange material used in the zone of the heat exchange beds, in which acid adhering to the material will be re-evaporated during the heat-up period of the cycle time, shall have low or no open porosity, or have a glazed surface, because the re-evaporization of acid decreases the thermal efficiency.

In a preferred embodiment of the invention the temperature in the catalytic beds of the reactors is controlled by purging a fraction of the hot gas stream and cooling the purged gas to about 400°C, converting remaining SO₂ to SO₃ in a catalytic reactor, then further cooling the gas to 220-290°C and finally to about 100°C in a sulphuric acid condenser before the gas is combined with the main gas stream.

Other features and advantages of the present invention will become apparent from the following description of the invention which refers to the accompanying drawing.

### BRIEF DESCRIPTION OF THE DRAWING

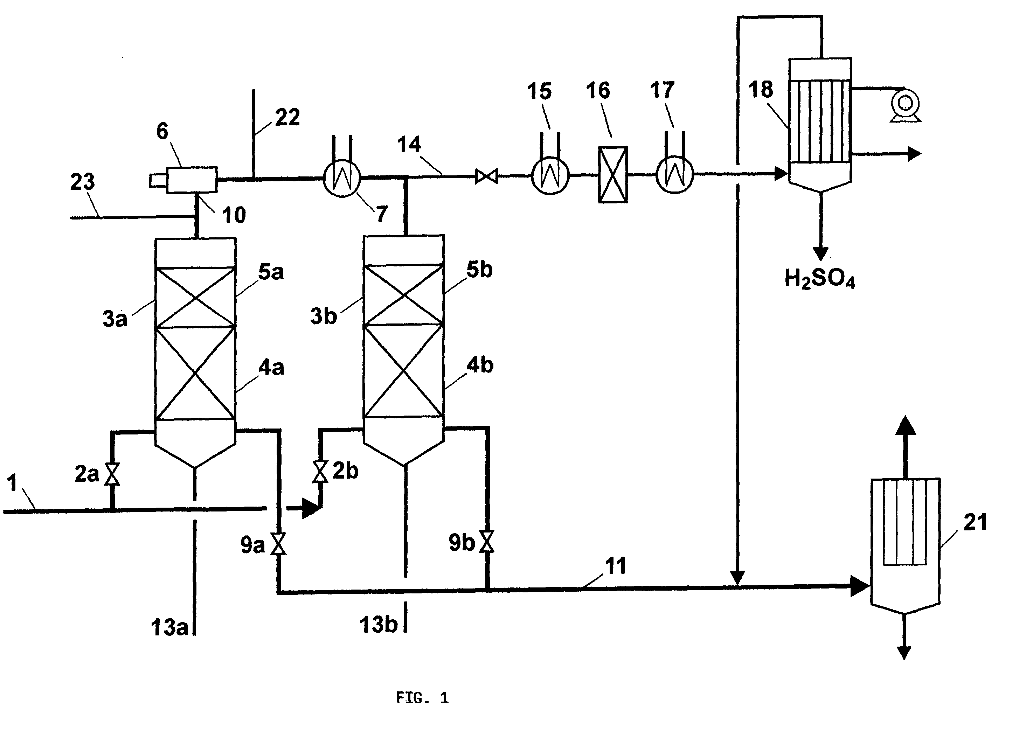

Fig. 1 shows a single absorption sulphuric acid lant according to a preferred embodiment of the present invention.

### DETAILED DESCRIPTION OF THE PREFERRED EMBODIMENT

Fig. 1 shows a simplified flow diagram for a specific embodiment of the invention for the desulphurization of off gas from the absorber of a single absorption sulphuric acid plant. The off gas contains N₂, O₂, CO₂ and typically 0.1-0.3% SO₂, 0-10 ppm SO₃ and 2-100 ppm H₂SO₄ as aerosol. It contains no H₂O. The gas is treated in the two series-connected reactors 3a and 3b shown in Fig 1. Each of the reactors is connected at the bottom to inlet line 1 with lines equipped with the on-off valves 2a and 2b, and to outlet line 11 with lines equipped with the on-off valves 9a and 9b.

H₂O in the form of steam or water spray is added either to the gas in line 1 or in line 10 that connects the top of the two reactors. The amount of H₂O added to the gas is equal to the amount that gives a molar ratio of H₂O to SO₂+SO₃ of at least 1.00 (i.e. no excess H₂O), or up to 2% H₂O after total conversion of SO₃ to H₂SO₄.

The direction of gas flow through the reactors is reversed every 5-15 minutes by alternately having valves 2a+9b open and valves 2b+9a closed, and having valves 2a+9b closed and valves 2b+9a open. Each of the reactors is loaded with a 0.5-1 m layer 5a and 5b of a conventional sulphuric acid catalyst, in the form of 20 mm rings, on top of a 1-2 meter layer 4a and 4b of acid resistant ceramic bodies in the form of 20-30 mm balls, saddles or Raschig rings. The gas mass velocity in the reactors is about 2000-3000 Nm³ gas per m² per hour. The temperature in the catalyst layers are adjusted to 350-450°C by gas heater 6. Gas cooler 7 and purge line 14 are not used in this embodiment of the invention.

In operation with off gases, the temperature profiles in each of the two reactors will oscillate between two positions during each period of **t** minutes between changes of the position of the valves. A distance **z** of movement of the temperature profile during a period between shifts of the valves is approximately **z** = t*G*cp/(W*cw), where W is the bulk weight of the ceramic bodies, cw and cp the heat capacities of the ceramics and the gas and G the gas mass velocity in the reactor.

Following reactions take place in each of the reactors:
Catalytic oxidation of SO₂, SO₂ + 1/2O₂ = SO₃, in the catalyst zone;
Gas phase hydration of SO₃ into H₂SO₄ vapour in the ceramic zone where the temperatures are in the range 150-350°C;
Condensation of H₂SO₄ with some H₂O in the zone of the ceramic bodies in which the temperature is below the sulphuric acid dew point of the gas phase.

In order to obtain nearly complete condensation of the H₂SO₄ vapour, the exit temperature of the gas at the bottom of the layer with ceramic bodies must be below the temperature at which the H₂SO₄ vapour pressure in equilibrium with the condensed acid is below a given limit, e.g. 2*10⁻⁶ atm. With 1-2% excess H₂O in the gas phase, pH₂SO₄ will be ≤ 2*10-6 atm at outlet temperatures below 90-100°C and 1-2% H₂O in the gas. The concentration of the condensed acid is approximately 70% H₂SO₄.

Some of the sulphuric acid will condense as acid aerosol in the gas phase. The aerosol can be removed in an aerosol filter 21. The amount of aerosol is suppressed by adding 10¹¹-10¹² solid particles/Nm³ per 1000 mole ppm SOx in the gas to the process gas in line 10. The particles are produced by oxidation of silicon oil in a small stream of air that is mixed into the process in line 10.

In desulphurization of off gas containing H₂S and CS₂ from production of viscose according to the invention, off gas with a content of H₂S+CS₂ leads to an adiabatic temperature rise of up to 120°C through reaction of H₂S and CS₂ into H₂SO₄-vapour. The gas is treated in the process shown in Fig. 1, with differences from the embodiment described above as follows:
(1) The catalyst zone consists of a layer of commercially available, sulphur resistant combustion catalyst from Haldor Topsoe A/S, placed between the layer of acid resistant bodies and the layer of sulphuric acid catalyst.
(2) A surplus of H₂O will usually be present so that addition of H₂O is not necessary.
(3) When the heat of reacting H₂S+CS₂ in the gas exceeds 60-80°C, the gas exit temperature is kept below 100°C by purging up to 15% of the process gas through line 14 from line 10 connecting the two reactors. The purge gas is cooled in cooler 15, the remaining SO₂ is converted to SO₃ in reactor 16, the gas is further cooled in cooler 17 and condensed in sulphuric acid condenser 18.

## Claims

1. A process for desulphurization of an off gas containing O₂, and sulphur-containing components like SO₂, SO₃, H₂SO₄, H₂S, CS₂, COS and organic sulphur-containing components, in which the combustible components are catalytically oxidized to H₂O, CO₂ and SO₂ over a combustion catalyst, and SO₂ is further catalytically oxidized to SO₃ over a sulphuric acid catalyst, SO₃ is further hydrated and condensed as sulphuric acid in presence of at least an equivalent amount of H₂O in the gas, the process being conducted in at least two reactors that are connected in series, each reactor being loaded with a layer of combustion catalyst placed between a layer of inert and acid resistant material with low or no open porosity, and a layer of sulphuric acid catalyst, the process comprising the steps of :
reversing a direction of gas flow in the reactors after periods of approximately 1-40 minutes; and
maintaining the temperature in the layers of catalyst in a range of 300-500°C;
wherein after oxidation of the sulphur-containing components the temperature of a gas stream leaving the reactors is at least 50°C below the H₂SO₄ dew point of the gas; and
condensed sulphuric acid is drained off from the bottom of each reactor.

2. The process of claim 1, wherein the step of maintaining the temperature in the layers of catalyst comprises at least one of the further steps of heating the gas stream, cooling the gas, and purging up to 20% of the gas.

3. A process according to claim 1 or 2, wherein a mass velocity of the gas in each of the two reactors is 1000-10000 Nm³ / h per m² of reactor cross section.

4. A process according to any of claims 1 to 3, wherein the inert layer in each of the reactors is a 0.5-5 meter high layer of acid resistant ceramic bodies with a volume to surface ratio of 1.5 to 15 mm.

5. A process according to any of claims 1 to 3, wherein the layer of inert material in each of the reactors is a bed of monoliths of an acid resistant material with parallel, vertical channels with a diameter of 3-20 mm.

6. A process according to any of claims 1 to 5, wherein the sulphuric acid catalyst is vanadium oxide supported on a silica carrier material and promoted with alkali metals.

7. A process according to claim 6, wherein the alkali metal is selected from the group consisting of potassium, sodium, and cesium.

8. A process according to claim 1, wherein formation of sulphuric acid aerosol in the condensation of H₂SO₄ vapour by cooling of the gas in the inert beds is suppressed by adding of a number of particles in the gas stream to a concentration of about 10¹⁰ - 10¹² particles per Nm³ per 1000 ppm of SO₃ in the gas.

9. A process according to claim 8, wherein the particles added to the gas stream are produced by thermal combustion of a silicon oil in a stream of air that is mixed into the gas.

10. A process according to claim 2, wherein the temperature in the layers of catalyst is controlled by purging a fraction of the hot gas stream and cooling the purged gas to about 400°C, converting remaining SO₂ to SO₃ in a catalytic reactor, then further cooling the gas to 220-290°C and finally to about 100°C in a sulphuric acid condenser before the gas is combined with the main gas stream.

## Patentansprüche

1. Verfahren zur Entschwefelung eines Abgases welches O₂ und schwefelhaltige Komponenten wie SO₂, SO₃, H₂SO₄, H₂S, CS, COS und organische schwefelhaltige Komponenten enthält, bei welchem die brennbaren Anteile katalytisch zu H₂O, CO₂ und SO₂ über einen Verbrennungskatalysator katalytisch oxidiert werden und SO₂ weiter zu SO₃ über einen Schwefelsäurekatalysator zu SO₃ katalytisch oxidiert wird, unter anschließender Hydratisierung und Kondensation von SO₃ als Schwefelsäure in Gegenwart von mindestens einer äquivalenten Menge von H₂O im Gas, wobei das Verfahren in mindestens zwei in Reihe miteinander verbundenen Reaktoren durchgeführt wird, wobei jeder Reaktor mit einer Schicht von Verbrennungskatalysator geladen ist, welcher zwischen einer Schicht von inertem und säureresistentem Material mit niedriger oder keiner offenen Porosität angeordnet ist, sowie einer Schicht von Schwefelsäurekatalysator, mit den Verfahrensschritten:
Umkehrung der Richtung der Gasströmung in den Reaktoren nach Perioden von etwa 1-40 Minuten; und
Aufrechterhalten der Temperatur in den Katalysatorschichten in einem Bereich von 300-500° C;
wobei nach Oxidation der schwefelhaltigen Komponenten die Temperatur eines die Reaktoren verlassenden Gasstromes mindestens um 50° C unterhalb des H₂SO₄ Taupunkte des Gases liegt; und
kondensierte Schwefelsäure vom Boden jedes Reaktors abgezogen wird.

2. Verfahren nach Anspruch 1, worin der Schritt der Temperaturaufrechterhaltung in den Katalysatorschichten mindestens einen der weiteren Schritte: Erwärmen des Gasstroms, Kühlen des Gases und Reinigen von bis zu 20 % des Gases umfasst.

3. Verfahren nach einem der Ansprüche 1 oder 2, worin die Massengeschwindigkeit des Gases in jedem der beiden Reaktoren 1.000-10.000 Nm³/h je m² Reaktorquerschnitt beträgt.

4. Verfahren nach einem der Ansprüche 1 bis 3, worin die Inertschicht in jedem der Reaktoren eine 0,5-5 m hohe Schicht aus säureresistenten Keramikkörpem ist, mit einem Verhältnis von Volumen zu Oberfläche von 1,5-15 mm.

5. Verfahren nach einem der Ansprüche 1 bis 3, worin die Schicht des Inertmaterials in jedem der Reaktoren ein Bett von Monolithen eines säureresistenten Materials ist, mit parallelen vertikalen Kanälen eines Durchmessers von 3-20 mm.

6. Verfahren nach einem der Ansprüche 1 bis 5, worin der Schwefelsäurekatalysator Nanadiumoxid auf einem Siliciumdioxidträgermaterial mit Alkalimetallbeschleunigern ist.

7. Verfahren nach Anspruch 6, worin das Alkalimetall ausgewählt ist aus der Gruppe Kalium, Natrium und Cäsium.

8. Verfahren nach Anspruch 1, worin die Bildung eines Schwefelsäureaerosols bei der Kondensation von H₂SO₄ Dampf durch Kühlen des Gases, in den Inertbetten, durch Hinzufügen einer Anzahl von Partikeln in den Gasstrom, bis zu einer Konzentration von etwa 10¹⁰-10¹² Partikeln je Nm³ pro 1.000 ppm von SO₃ in das Gas unterdrückt wird.

9. Verfahren nach Anspruch 8, worin die dem Gasstrom hinzugegebene Partikel durch thermische Verbrennung eines Siliciumöls in einem Luftstrom hergestellt werden, welcher dem Gas beigemischt wird.

10. Verfahren nach Anspruch 2, worin die Temperatur in den Katalysatorschichten durch Reinigung einer Fraktion des heißen Gasstromes und Kühlen des gereinigten Gases auf etwa 400° C geregelt wird, unter Umwandlung des verbleibenden SO₂ in SO₃ in einem katalytischen Reaktor unter weiterem Kühlen des Gases auf 220-290° C und abschließend auf etwa 100° C in einem Schwefelsäurekondensor, bevor das Gas mit dem Hauptgasstrom vereinigt wird.

## Revendications

1. Procédé de désulfuration d'un gaz d'échappement contenant O₂ et des composants contenant du soufre tels que SO₂, SO₃, H₂SO₄, H₂S, CS₂, COS et des composants organiques contenant du soufre, dans lequel les composants combustibles sont oxydés par catalyse en H₂O, CO₂, et SO₂, sur un catalyseur de combustion, et SO₂ est oxydé en outre par catalyse en SO₃, sur un catalyseur acide sulfurique, SO₃ est hydraté en outre et condensé en acide sulfurique en présence d'au moins une quantité équivalente de H₂O dans le gaz, le procédé étant réalisé dans au moins deux réacteurs qui sont branchés en série, chaque réacteur étant chargé d'une couche de catalyseur de combustion placé entre une couche de matière inerte et résistante aux acides, avec une faible, voire aucune, porosité ouverte, et une couche de catalyseur acide sulfurique, le procédé comprenant les étapes consistant :
à inverser un sens d'écoulement gazeux dans le réacteur après des périodes d'environ 1 à 40 min; et
à maintenir la température dans les couches de catalyseur dans une plage de 300 à 500°C;
dans lequel après oxydation des composants contenant du soufre, la température d'un courant gazeux quittant le réacteur est au moins inférieure de 50°C au point de rosée de H₂SO₄ du gaz; et
l'acide sulfurique condensé est évacué à partir du fond de chaque réacteur.

2. Procédé selon la revendication 1, dans lequel l'étape de maintien de la température dans les couches de catalyseur comprend au moins une des étapes supplémentaires consistant à chauffer le courant gazeux, à refroidir le gaz, et à purger jusqu'à 20% du gaz.

3. Procédé selon la revendication 1 ou 2, dans lequel une vitesse massique du gaz dans chacun des deux réacteurs est de 1 000 à 10 000 m³/h (C.N.) par m² de section transversale de réacteur.

4. Procédé selon l'une quelconque des revendications 1 à 3, dans lequel la couche inerte dans chacun des réacteurs est une couche haute de 0,5 à 5 mètres, de corps céramiques résistants aux acides, ayant un rapport de volume à surface de 1,5 à 15 mm.

5. Procédé selon l'une quelconque des revendications 1 à 3, dans lequel la couche de matière inerte dans chacun des réacteurs est un lit de monolithes d'une matière résistante aux acides, ayant des canaux parallèles, verticaux avec un diamètre de 3 à 20 mm.

6. Procédé selon l'une quelconque des revendications 1 à 5, dans lequel le catalyseur acide sulfurique est l'oxyde de vanadium supporté sur une matière support à base de silice, et activé par des métaux alcalins.

7. Procédé selon la revendication 6, dans lequel le métal alcalin est choisi dans le groupe formé par le potassium, le sodium, et le césium.

8. Procédé selon la revendication 1, dans lequel la formation de l'aérosol d'acide sulfurique dans la condensation de la vapeur H₂SO₄, par refroidissement du gaz dans les lits inertes, est supprimée par l'addition d'un certain nombre de particules dans le courant gazeux jusqu'à une concentration d'environ 10¹⁰ à 10¹² particules par m³ (C.N.) pour 1 000 ppm de SO₃, dans le gaz.

9. Procédé selon la revendication 8, dans lequel les particules ajoutées au courant gazeux sont produites par combustion thermique d'une huile de silicone dans un courant d'air que l'on mélange dans le gaz.

10. Procédé selon la revendication 2, dans lequel la température dans les couches de catalyseur est régulée en purgeant une fraction du courant gazeux chaud et en refroidissant le gaz purgé à environ 400°C, en convertissant le SO₂ résiduel en SO₃ dans un réacteur catalytique, puis en refroidissant en outre le gaz à 220-290°C et finalement jusqu'à environ 100°C dans un condenseur acide sulfurique avant que le gaz ne soit combiné avec le courant gazeux principal.
